# FASCICULE DE BREVET EUROPEEN

(11) **EP 1 123 726 B1**
(45) Date de publication et mention de la délivrance du brevet: **28.11.2007**
(21) Numéro de dépôt: 01400319.8
(22) Date de dépôt: 08.02.2001
(51) Int. Cl.: B01D 46/06, B01D 39/16, F04B 39/16

(54) **Procédé et appareil de compression d'air atmosphérique, et installations de distillation d'air et à turbine à gaz correspondantes**
Verfahren und Apparat zur Kompression atmosphärischer Luft und Anlage zur Destillation von Luft und Turbine für korrespondierende Gase
Process and apparatus for the compression of atmospheric air, plant for distilling air and turbine for corresponding gases

(30) Priorité: 11.02.2000 FR 0001731
(43) Date de publication de la demande: 16.08.2001
(73) Titulaire: L'AIR LIQUIDE, Société Anonyme pour l'Etude et l'Exploitation des Procédés Georges Claude, 75007 Paris (FR)
(72) Inventeur: Colson, Alain, 94100 Saint Maur (FR)

(56) Documents cités:
- WO-A-98/32970
- CH-A- 557 191
- US-A- 4 336 043
- US-A- 5 261 946
- PATENT ABSTRACTS OF JAPAN vol. 6, no. 110, 22 juin 1982 (1982-06-22) & JP 57 038916 A (DYNIC CORP.), 3 mars 1982 (1982-03-03)

## Description

La présente invention est relative à un procédé de compression d'air atmosphérique au moyen d'un compresseur centrifuge ou axial, cet air étant à une température naturelle comprise entre -20°C et + 5°C environ, hors périodes de brouillard givrant, de pluie en surfusion ou de neige, du type dans lequel on sépare éventuellement les gouttelettes contenues dans l'air, puis on soumet l'air à une étape de filtration ou à plusieurs étapes de filtration successives.

L'air ainsi comprimé peut notamment être destiné à alimenter un appareil de distillation d'air ou une turbine à gaz du type industrielle. Par « turbine à gaz du type industrielle », on entend les turbines à gaz dites « heavy duty », par opposition aux turbines dites « aérodérivées ».

Les compresseurs d'air atmosphérique des installations de distillation d'air et des turbines à gaz « industrielles » aspirent de l'air humide dont les conditions de température et d'humidité sont telles que les filtres situés à l'aspiration de ces machines peuvent être soumis à un givrage lorsque la température ambiante est inférieure à une certaine valeur. Un tel givrage, qui ne concerne généralement que le premier étage de filtration si plusieurs étages sont utilisés, peut avoir des effets négatifs très importants et compromettre la performance énergétique et la fiabilité de l'installation. Ainsi, suivant la conception et la structure d'un filtre donné, de son mode de fonctionnement et de son encrassement à un instant donné, les effets du givrage peuvent conduire à une élévation excessive et inadmissible de la perte de charge des filtres d'aspiration.

Les risques techniques encourus par la machine de compression située en aval et propres à cette situation sont élevés, et, par conséquent, les constructeurs de ces machines imposent ou recommandent fréquemment que l'air aspiré soit réchauffé en amont des filtres de manière à éviter tous les risques liés à un éventuel givrage des filtres. Dans le cas particulier des turbines à gaz « industrielles », le réchauffage est imposé lorsque la température de l'air extérieur descend en dessous de +5° ou même +8°C, et/ou selon l'humidité relative de l'air. Dans le cas des compresseurs d'air à distiller, le seuil de réchauffage recommandé est généralement voisin de ces valeurs. Ce réchauffage est généralement imposé indistinctement du type de filtre installé à l'aspiration de ces machines.

Or, le réchauffage de l'air a pour résultat une réduction de la masse volumique de l'air, et par suite une baisse des performances de compression ou de l'installation. Cette chute de performances liée au réchauffage peut atteindre 3 à 7%, et ce pendant une période de plusieurs mois par an, ce qui est extrêmement coûteux pour l'exploitant de la machine de compression.

WO 98/32970 divulgue un procédé et une installation de compression d'air atmosphérique permettant de prévenir la formation de glace ou givre sur le filtre placé en amont du compresseur en irradiant l'air avec un rayonnement de type infra-rouge ou micro-onde.

L'invention a pour but de permettre l'élimination du réchauffage de l'air lié aux problèmes de givrage des filtres tout en assurant une protection efficace de la machine de compression contre l'encrassement.

A cet effet, l'invention a pour objet un procédé de compression d'air atmosphérique du type précité, caractérisé en ce que :
- pour la ou la première étape de filtration, on utilise des éléments filtrants à poches dont le média filtrant est composé de fibres synthétiques ayant une densité qui augmente dans le sens de circulation de l'air à travers ce média; et
- on introduit l'air dans lesdits éléments filtrants à poches à sa température naturelle.
   L'invention a également pour objets
- un appareil de compression d'air atmosphérique, du type comprenant un compresseur centrifuge ou axial, éventuellement un séparateur de gouttelettes, et un ensemble de filtration comprenant au moins un étage de filtration,
caractérisé en ce que le ou le premier étage de filtration comprend des éléments filtrants à poches dont le média filtrant est composé de fibres synthétiques ayant une densité qui augmente dans le sens de circulation de l'air à travers ce média ;
- une installation de distillation d'air,
caractérisée en ce qu'elle comprend un appareil de compression d'air atmosphérique tel que défini ci-dessus, alimentant un appareil de distillation d'air ; et
- une installation à turbine à gaz, caractérisée en ce qu'elle comprend un appareil de compression d'air atmosphérique tel que défini ci-dessus, alimentant une turbine à gaz du type industrielle.

Des exemples de mise en oeuvre de l'invention vont maintenant être décrits en regard du dessin annexé, sur lequel :
- la Figure 1 représente schématiquement une installation de compression d'air conforme à l'invention ;
- la Figure 2 représente schématiquement le côté d'entrée du filtre amont de cette installation ;
- la Figure 3 est une vue schématique en perspective du côté d'entrée d'un élément filtrant du filtre de la Figure 2 ;
- la Figure 4 est une vue schématique partielle prise en coupe suivant la ligne IV-IV de la Figure 3 ; et
- la Figure 5 représente à plus grande échelle et en coupe le détail V de la Figure 4.

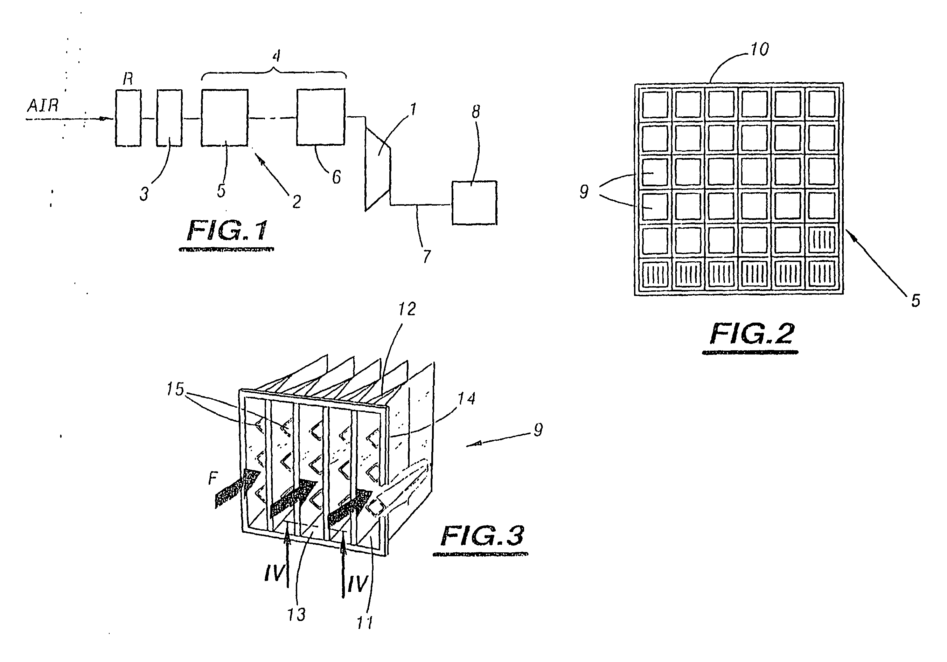

L'installation de compression représentée sur la Figure 1 comprend un compresseur d'air 1 dont l'aspiration est reliée à une ligne d'alimentation 2. Cette dernière possède une entrée ouverte sur l'atmosphère et comprend, d'amont vers l'aval, un réchauffeur R, un séparateur de gouttelettes 3 et un ensemble de filtration 4.

L'ensemble de filtration 4 comprend un premier étage de filtration ou étage de filtration amont 5, suivi d'un ou de plusieurs autres étages de filtration tels que 6. Chaque étage est adapté à la filtration de certains types de particules contenues dans l'air atmosphérique, ces particules ayant des dimensions qui s'échelonnent typiquement de 0,01 µm à 10 µm environ.

Le refoulement du compresseur 1 est relié à une conduite de refoulement 7 qui mène en 8 à la chambre de combustion d'une turbine à gaz « industrielle », ou bien à un appareil d'une installation de distillation d'air, notamment un appareil de dessiccation-décarbonatation de l'air par adsorption.

L'étage de filtration amont ou filtre amont 5 est représenté schématiquement sur la Figure 2. Il est constitué d'une juxtaposition d'un grand nombre d'éléments filtrants 9 tous identiques, montés dans un châssis d'assemblage 10. L'un de ces éléments filtrants est représenté sur les Figures 3 à 5.

L'élément filtrant 9 comprend un assemblage à configuration plissée de feuilles 11 de média filtrant, thermosoudé sur chaque bord en 12, de façon à former plusieurs poches 13 juxtaposées, au nombre de six à douze. Le bord d'entrée de l'ensemble des poches est fixé par surmoulage ou par fixation mécanique à un cadre d'entrée 14 de forme carrée, qui maintient ouverte l'entrée de l'élément 9.

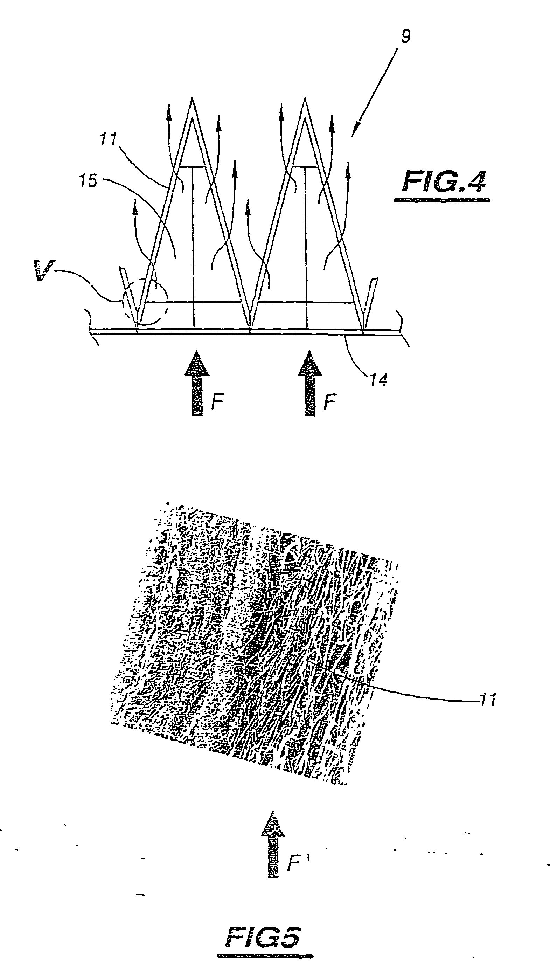

De plus, chaque poche 13 contient généralement plusieurs manches de stabilisation et de répartition du flux d'air 15 contenues dans son plan général médian, afin d'empêcher la poche de s'affaisser et de garantir l'utilisation effective de toute la surface filtrante. Chaque manche 15 est constituée par un tronc de pyramide en matériau relativement rigide, par exemple en matière plastique, ouvert à ses deux extrémités et dont l'axe est parallèle à la direction générale F d'écoulement de l'air à filtrer. Les manches 15 sont maintenues en place par thermosoudage ou fixation mécanique sur les feuilles 11 (Figure 4).

L'élément filtrant 9 est un filtre à poches de formant standard 24'', c'est-à-dire dont le cadre 14 a pour dimension 592 x 592 mm. La profondeur de l'élément filtrant peut s'élever jusqu'à 600 mm. Le média 11, dit à structure progressive, est composé de fibres synthétiques, par exemple de polypropylène ou de polycarbonate, disposées en plusieurs couches dont la densité croît d'amont vers l'aval dans la direction générale d'écoulement F' de l'air à travers le média, comme représenté sur la Figure 5. Un tel média est insensible à l'humidité et permet une filtration en profondeur. L'élément 9 possède une structure ouverte avec une grande surface de filtration sur toute sa profondeur et une très bonne distribution du flux d'air.

On choisit le nombre d'éléments 9, en fonction du débit total d'air à comprimer, de manière que le débit traversant chaque élément 9 soit inférieur ou égal à 80% du débit nominal, et typiquement inférieur ou égal à 3000 m³/h, avec une vitesse moyenne de filtration (rapport du débit d'air à la surface développée du média 11) comprise entre 0,1 et 0,4 m/s et de préférence inférieure ou égale à 0,2m/s.

De façon surprenante, on a constaté qu'avec de tels éléments filtrants fonctionnant dans de telles conditions, pour de l'air à une température pouvant descendre jusqu'à -20°C (hors périodes de brouillard givrant, de pluie en surfusion ou de neige), on élimine sensiblement totalement les effets négatifs liés au givrage, de sorte que la perte de charge au passage de l'étage de filtration 5 reste inférieure à sa limite supérieure nominale, soit 250 Pa ou 450 Pa selon la classe d'efficacité des éléments filtrants 9. L'étage de filtration 5 conserve une très grande capacité de rétention qui limite ou élimine les effets de colmatage en présence d'eau ou d'humidité, tout en conservant une perte de charge extrêmement faible comme indiqué ci-dessus, une efficacité gravimétrique supérieure à 99%, ainsi qu'une efficacité opacimétrique qui peut atteindre 95%, suivant les normes ASHRAE 52.1 ou 52.2 et EN 779.

Des exemples d'éléments filtrants 9 ayant donné satisfaction sont le filtre à poches PEL F6 de la société hollandaise FILTRAIR, ou encore le filtre à poches T60 de la société allemande FREUDENBERG. Chacun de ces filtres possède un débit nominal supérieur à la valeur de 3000 m³/h indiquée plus haut.

L'invention permet de se passer pendant une fraction importante de l'année de tout réchauffage d'air en amont du compresseur d'air, ce qui évite toute baisse de performances de ce dernier due au phénomène de givrage. Le réchauffeur R n'est utilisé qu'en période de brouillard givrant, de pluie en surfusion ou de neige. Les économies d'énergie ainsi réalisées par temps froid sont considérables pour les installations de grande taille.

Comme on le comprend, l'invention s'applique également à des installations à un seul étage de filtration 5.

En variante, on peut également utiliser le procédé de l'invention pour alimenter des turbines à gaz de type aérodérivé, ou pour fournir à des sites industriels de l'air comprimé servant de fluide « utilitaire », c'est-à-dire de fluide de commande, de contrôle ou autre.

Par ailleurs, chaque côté de chaque élément filtrant peut avoir pour dimension 24'', comme indiqué plus haut, ou un multiple ou un sous-multiple de cette valeur. On peut ainsi utiliser des éléments filtrants de 24" x 24", 12" x 24", 24" x 48", etc.

## Revendications

1. - Procédé de compression d'air atmosphérique au moyen d'un compresseur (1) centrifuge ou axial, cet air étant à une température naturelle comprise entre -20°C et + 5°C environ, hors périodes de brouillard givrant, de pluie en surfusion ou de neige, du type dans lequel on sépare éventuellement les gouttelettes contenues dans l'air, puis on soumet l'air à une étape de filtration (5) ou à plusieurs étapes de filtration (5, 6) successives, **caractérisé en ce que** :
- pour la ou la première étape de filtration (5), on utilise des éléments filtrants à poches (9) dont le média filtrant (11) est composé de fibres synthétiques ayant une densité qui augmente dans le sens (F') de circulation de l'air à travers ce média ; et
- on introduit l'air dans lesdits éléments filtrants à poches (9) à sa température naturelle.

2. - Procédé suivant la revendication 1, **caractérisé en ce qu'**on établit le débit d'air qui traverse chaque élément filtrant (9) à une valeur qui correspond à une vitesse moyenne de filtration à travers le média (11) comprise entre 0,1 et 0,4 m/s.

3. - Procédé suivant la revendication 1 ou 2,
**caractérisé en ce que** la vitesse moyenne de filtration à travers le média (11) est comprise entre 0,1 et 0,2 m/s.

4. - Procédé suivant l'une quelconque des revendications 1 à 3, **caractérisé en ce que** chaque élément filtrant (9) est un élément filtrant de format standard dont la face frontale a pour dimension 592 x 592 mm.

5. - Procédé suivant la revendication 4, **caractérisé en ce que** chaque côté de la face frontale de chaque élément filtrant a pour dimension 592 mm ou un multiple ou un sous-multiple de cette valeur.

6. - Procédé suivant la revendication 4 ou 5,
**caractérisé en ce que** le média filtrant (11) est un polymère synthétique, par exemple de type polypropylène ou polycarbonate.

7. - Procédé suivant l'une quelconque des revendications 1 à 6, **caractérisé en ce que** le débit d'air est limité à 80% du débit nominal pour chaque élément filtrant (9).

8. - Procédé suivant l'une quelconque des revendications 1 à 7, **caractérisé en ce que** la filtration (5, 6) a lieu avant l'étape de compression.

9. - Procédé suivant l'une quelconque des revendications 1 à 8, **caractérisé en ce que** le compresseur est destiné à alimenter un appareil de distillation d'air ou une turbine à gaz du type industrielle.

10. - Appareil de compression d'air atmosphérique, du type comprenant un compresseur (1) centrifuge ou axial, éventuellement un séparateur de gouttelettes (3), et un ensemble de filtration (7) comprenant au moins un étage de filtration (5, 6), **caractérisé en ce que** le ou le premier étage de filtration (5) comprend des éléments filtrants à poches (9) dont le média filtrant (11) est composé de fibres synthétiques ayant une densité qui augmente dans le sens (F') de circulation de l'air à travers ce média.

11. - Appareil suivant la revendication 10, **caractérisé en ce que** le débit d'air qui traverse chaque élément filtrant (9) est établi à une valeur qui correspond à une vitesse moyenne de filtration à travers le média (11) comprise entre 0,1 et 0,4 m/s.

12. - Appareil suivant la revendication 11,
**caractérisé en ce que** la vitesse moyenne de filtration à travers le média (11) est comprise entre 0,1 et 0,2 m/s.

13. - Appareil suivant la revendication 11 ou 12, **caractérisé en ce que** chaque élément filtrant (9) est un élément filtrant de format standard dont la face frontale a pour dimension 592 x 592 mm.

14. - Appareil suivant la revendication 13, **caractérisé en ce que** chaque côté de la face frontale de chaque élément filtrant a pour dimension 592 mm ou un multiple ou un sous-multiple de cette valeur.

15. - Appareil suivant la revendication 13 ou 14, **caractérisé en ce que** le média filtrant (11) est un polymère synthétique, par exemple de type polypropylène ou polycarbonate.

16. - Appareil suivant l'une quelconque des revendications 11 à 15, **caractérisé en ce que** le débit d'air est limité à 80% du débit nominal pour chaque élément filtrant (9).

17. - Appareil suivant l'une quelconque des revendications 11 à 16, **caractérisé en ce que** l'ensemble de filtration (4) est disposé en amont du compresseur (1).

18. - Installation de distillation d'air, **caractérisée en ce qu'**elle comprend un appareil de compression d'air atmosphérique suivant l'une quelconque des revendications 10 à 17, alimentant un appareil de distillation d'air.

19. - Installation à turbine à gaz, **caractérisée en ce qu'**elle comprend un appareil de compression d'air atmosphérique suivant l'une quelconque des revendications 10 à 17, alimentant une turbine à gaz du type industrielle.

## Claims

1. Method for compressing atmospheric air using a centrifugal or axial compressor (1), the said air being at a natural temperature of between about -20°C and +5°C, outside periods of freezing mist, supercooled rain or snow, of the type in which any droplets contained in the air are separated, the air is then subjected to a filtration step (5) or to a plurality of successive filtration steps (5, 6), **characterized in that**:
- for the or the first filtration step (5), use is made of bag filter elements (9) whereof the filter medium (11) comprises synthetic fibres having a density which increases in the air flow direction (F') through the said medium; and
- the air is introduced into the said bag filter elements (9) at its natural temperature.

2. Method according to Claim 1, **characterized in that** the air flow passing through each filter element (9) is established at a value corresponding to an average filtration speed through the medium (11) of between 0.1 and 0.4 m/s.

3. Method according to either of Claims 1 and 2, **characterized in that** the average filtration speed through the medium (11) is between 0.1 and 0.2 m/s.

4. Method according to any one of Claims 1 to 3, **characterized in that** each filter element (9) is a filter element in standard format whereof the front side measures 592 x 592 mm.

5. Method according to Claim 4, **characterized in that** each side of the front face of each filter element has the dimension of 592 mm or a multiple or a sub-multiple thereof.

6. Method according to either of Claims 4 and 5, **characterized in that** the filter medium (11) is a synthetic polymer, for example of the polypropylene or polycarbonate type.

7. Method according to any one of Claims 1 to 6, **characterized in that** the air flow is limited to 80% of the nominal flow for each filter element (9).

8. Method according to any one of Claims 1 to 7, **characterized in that** the filtration (5, 6) takes place before the compression step.

9. Method according to any one of Claims 1 to 8, **characterized in that** the compressor is designed to supply an air distillation apparatus or an industrial-type gas turbine.

10. Apparatus for compressing atmospheric air, of the type comprising a centrifugal or axial compressor (1), optionally a droplet separator (3), and a filtration unit (7) comprising at least one filtration stage (5, 6), **characterized in that** the or the first filtration stage (5) comprises bag filter elements (9) whereof the filter medium (11) comprises synthetic fibres having a density which increases in the air flow direction (F') through the said medium.

11. Apparatus according to Claim 10, **characterized in that** the air flow passing through each filter element (9) is established at a value corresponding to an average filtration speed through the medium (11) of between 0.1 and 0.4 m/s.

12. Apparatus according to Claim 11, **characterized in that** the average filtration speed through the medium (11) is between 0.1 and 0.2 m/s.

13. Apparatus according to either of Claims 11 and 12, **characterized in that** each filter element (9) is a filter element in standard format whereof the front side measures 592 x 592 mm.

14. Apparatus according to Claim 13, **characterized in that** each side of the front face of each filter element has the dimension of 592 mm or a multiple or a sub-multiple thereof.

15. Apparatus according to either of Claims 13 and 14, **characterized in that** the filter medium (11) is a synthetic polymer, for example of the polypropylene or polycarbonate type.

16. Apparatus according to any one of Claims 11 to 15, **characterized in that** the air flow is limited to 80% of the nominal flow for each filter element (9).

17. Apparatus according to any one of Claims 11 to 16, **characterized in that** the filtration unit (4) is placed upstream of the compressor (1).

18. Air distillation installation, **characterized in that** it comprises an apparatus for compressing atmospheric air according to any one of Claims 10 to 17, supplying an air distillation apparatus.

19. Gas turbine installation, **characterized in that** it comprises an apparatus for compressing atmospheric air according to any one of Claims 10 to 17, supplying an industrial-type gas turbine.

## Patentansprüche

1. Verdichtungsverfahren für atmosphärische Luft mittels eines Kreisel- oder Axialverdichters (1), wobei die natürliche Temperatur dieser Luft ungefähr zwischen -20 °C und +5 °C liegt, Zeitabschnitte mit gefrierendem Nebel, unterkühltem Regen oder Schnee ausgenommen, und wobei das Verfahren derart beschaffen ist, dass möglicherweise die Tröpfchen, die in der Luft enthalten sind, abgetrennt werden, woraufhin die Luft einen Filtrationsschritt (5) oder mehrere, aufeinander folgende Filtrationsschritte (5, 6) erfährt, **dadurch gekennzeichnet, dass**
- für den bzw. den ersten Filtrationsschritt (5) Beutelfilterelemente (9) verwendet werden, deren Filtermedium (11) aus synthetischen Fasern besteht, deren Dichte in der Strömungsrichtung (F') der Luft durch das Medium zunimmt; und
- dass die Luft mit ihrer natürlichen Temperatur in die Beutelfilterelemente (9) eingeleitet wird.

2. Verfahren nach Anspruch 1, **dadurch gekennzeichnet, dass** der Luftstrom, der jedes Filterelement (9) durchströmt, auf einen Wert eingestellt wird, der einer mittleren Filtrationsgeschwindigkeit durch das Medium (11) entspricht, die zwischen 0,1 und 0,4 m/s beträgt.

3. Verfahren nach Anspruch 1 oder 2, **dadurch gekennzeichnet, dass** die mittlere Filtrationsgeschwindigkeit durch das Medium (11) zwischen 0,1 und 0,2 m/s liegt.

4. Verfahren nach einem beliebigen der Ansprüche 1 bis 3, **dadurch gekennzeichnet, dass** es sich bei jedem Filterelement (9) um ein Filterelement im Standardformat handelt, dessen Frontfläche die Maße 592 x 592 mm aufweist.

5. Verfahren nach Anspruch 4, **dadurch gekennzeichnet, dass** jede Seite der Frontfläche jedes der Filterelemente 592 mm misst, oder ein Vielfaches dieses Wertes oder einen ganzzahligen Bruchteil davon.

6. Verfahren nach Anspruch 4 oder 5, **dadurch gekennzeichnet, dass** es sich bei dem Filtermedium (11) um ein synthetisches Polymer, zum Beispiel des Typs Polypropylen oder Polycarbonat, handelt.

7. Verfahren nach einem beliebigen der Ansprüche 1 bis 6, **dadurch gekennzeichnet, dass** der Luftstrom auf 80 % des Nennwertes für jedes Filterelement (9) begrenzt wird.

8. Verfahren nach einem beliebigen der Ansprüche 1 bis 7, **dadurch gekennzeichnet, dass** die Filtration (5, 6) vor dem Verdichtungsschritt erfolgt.

9. Verfahren nach einem beliebigen der Ansprüche 1 bis 8, **dadurch gekennzeichnet, dass** der Verdichter dazu bestimmt ist, eine Vorrichtung zur Luftdestillation oder eine Gasturbine industrieller Bauart zu speisen.

10. Vorrichtung zur Verdichtung atmosphärischer Luft, welche derart beschaffen ist, dass sie einen Kreisel- oder Axialverdichter (1), möglicherweise einen Tröpfchenabscheider (3) sowie eine Filtrationsgesamteinheit (4) umfasst, wobei Letztere mindestens eine Filtrationsstufe (5, 6) umfasst, **dadurch gekennzeichnet, dass** die bzw. die erste Filtrationsstufe (5) Beutelfilterelemente (9) umfasst, deren Filtermedium (11) aus synthetischen Fasern besteht, deren Dichte in der Strömungsrichtung (F') der Luft durch das Medium zunimmt.

11. Vorrichtung nach Anspruch 10, **dadurch gekennzeichnet, dass** der Luftstrom, der jedes Filterelement (9) durchströmt, auf einen Wert eingestellt wird, der einer mittleren Filtrationsgeschwindigkeit durch das Medium (11) entspricht, die zwischen 0,1 und 0,4 m/s beträgt.

12. Vorrichtung nach Anspruch 11, **dadurch gekennzeichnet, dass** die mittlere Filtrationsgeschwindigkeit durch das Medium (11) zwischen 0,1 und 0,2 m/s liegt.

13. Vorrichtung nach Anspruch 11 bis 12, **dadurch gekennzeichnet, dass** es sich bei jedem Filterelement (9) um ein Filterelement im Standardformat handelt, dessen Frontfläche die Maße 592 x 592 mm aufweist.

14. Vorrichtung nach Anspruch 13, **dadurch gekennzeichnet, dass** jede Seite der Frontfläche jedes der Filterelemente 592 mm misst, oder ein Vielfaches dieses Wertes oder einen ganzzahligen Bruchteil davon.

15. Vorrichtung nach Anspruch 13 oder 14, **dadurch gekennzeichnet, dass** es sich bei dem Filtermedium (11) um ein synthetisches Polymer, zum Beispiel des Typs Polypropylen oder Polycarbonat, handelt.

16. Vorrichtung nach einem beliebigen der Ansprüche 11 bis 15, **dadurch gekennzeichnet, dass** der Luftstrom auf 80 % des Nennwertes für jedes Filterelement (9) begrenzt wird.

17. Vorrichtung nach einem beliebigen der Ansprüche 11 bis 16, **dadurch gekennzeichnet, dass** die Filtrationsgesamteinheit (4) dem Verdichter (1) vorgeschaltet ist.

18. Anlage zur Luftdestillation, **dadurch gekennzeichnet, dass** sie eine Vorrichtung zur Verdichtung atmosphärischer Luft nach einem beliebigen der Ansprüche 10 bis 17 umfasst, welche eine Vorrichtung zur Luftdestillation speist.

19. Gasturbinenanlage, **dadurch gekennzeichnet, dass** sie eine Vorrichtung zur Verdichtung atmosphärischer Luft nach einem beliebigen der Ansprüche 10 bis 17 umfasst, welche eine Gasturbine industrieller Bauart speist.
